**Europäisches Patentamt**

**European Patent Office**

**Office européen des brevets**

(19)

(11) **EP 1 398 602 A2**

(12) **EUROPÄISCHE PATENTANMELDUNG**

| | |
|---|---|
| (43) Veröffentlichungstag:<br>**17.03.2004 Patentblatt 2004/12** | (51) Int Cl.⁷: **G01D 5/36**, F15B 15/28,<br>B66F 3/24 |

(21) Anmeldenummer: **03019591.1**

(22) Anmeldetag: **03.09.2003**

| | |
|---|---|
| (84) Benannte Vertragsstaaten:<br>**AT BE BG CH CY CZ DE DK EE ES FI FR GB GR<br>HU IE IT LI LU MC NL PT RO SE SI SK TR**<br>Benannte Erstreckungsstaaten:<br>**AL LT LV MK** | (72) Erfinder:<br>• **Knestel, Anton**<br>  **87496 Hopferbach (DE)**<br>• **Basta, Robert, Dipl.-Ing.**<br>  **87509 Immenstadt (DE)** |
| (30) Priorität: **13.09.2002 DE 10242630** | (74) Vertreter: **Beetz & Partner Patentanwälte**<br>**Steinsdorfstrasse 10**<br>**80538 München (DE)** |
| (71) Anmelder: **MAHA Maschinenbau Haldenwang<br>GmbH & Co. KG**<br>**87490 Haldenwang (DE)** | |

(54) **Positionsmess- und Steuervorrichtung für Hebebühnen**

(57)    Die Erfindung betrifft ein Verfahren und eine Vorrichtung zur Ermittlung der Position eines beweglichen Körpers, insbesondere einer Kolbenstange eines Hydraulikzylinders, sowie eine Steuervorrichtung für Hydraulikzylinder. Die Meßvorrichtung zur Ermittlung der Position x eines beweglichen Körpers (1) weist mehrere Wegmarken (2) auf dem beweglichen Körper (1), einen Sensor (3), der einen zumindest eine Wegmarke (2') und/oder zumindest einen Zwischenraum (5') zwischen den Wegmarken (2) umfassenden Bereich des Körpers (1) erfaßt, und eine Auswertevorrichtung (4) auf, die einen Zählerstand Z unter Berücksichtigung des Sensorausgangssignals S verändert, um eine Bewegung des Körpers (1) zu erfassen, und die einen Zusammenhang der vom Sensor (3) erfaßten Bereiche von Wegmarken (2) und Zwischenräumen (5) anhand des Signalwertes des Sensorausgangssignals S ermittelt. Die Auswertevorrichtung (4) bestimmt die Position x des Körpers (1) basierend auf dem Zählerstand Z und dem ermittelten Zusammenhang zwischen den vom Sensor (3) erfaßten Bereichen.

Fig. 1

**Beschreibung**

Die Erfindung betrifft ein Verfahren und eine Vorrichtung zur Ermittlung der Position eines beweglichen Körpers, insbesondere einer Kolbenstange eines Hydraulikzylinders, sowie eine Steuervorrichtung für Hydraulikzylinder.

Hebebühnen, insbesondere für Fahrzeuge, besitzen in der Regel eine oder mehrere Hubeinheiten zum Anheben oder Absenken einer Plattform, auf welcher der anzuhebende Gegenstand aufsteht. Ein anzuhebendes Fahrzeug wird beispielsweise auf eine ein- oder mehrteilige Plattform (Fahrfläche) aufgefahren, die zum Arbeiten an dem Fahrzeug von der bzw. den Hubeinheiten angehoben wird. Das Fahrzeug kann auch von einem Tragwerk mit einem oder mehreren Tragarmen angehoben werden. Bei einigen bekannten Hebebühnen ist für jede Achse bzw. jedes Rad des Fahrzeugs eine separate Hubeinheit vorgesehen.

Um den anzuhebenden Körper auf einer vorgegebenen Hubhöhe zu positionieren, ist eine genaue Erfassung der Höhe der Plattform bzw. des Tragwerks erforderlich. Meist wird zur Ermittlung der Hubhöhe der Verfahrweg der Hubeinheit erfaßt und die Hubhöhe anhand der bekannten Geometrie (Verhältnisse der Hebelarme) der Hebebühne ermittelt.

Aus der DE 36 34 730 ist das Anbringen von Markierungen auf der Kolbenstange eines Hydraulikzylinders bekannt (insbesondere durch Ausfräsen von Nuten). Bei einer Bewegung der Kolbenstange erfaßt ein Sensor die passierenden Markierungen auf der Kolbenstange. Die Position der Kolbenstange wird anhand der Anzahl der vom Sensor erfaßten Markierungen ermittelt. Die maximale Wegauflösung dieser inkrementalen Wegmessung wird durch den Abstand der Markierungen auf der Kolbenstange bestimmt. Da Markierungen nur mit einem begrenzt feinen Raster auf einem Körper aufgebracht werden können, ist die Genauigkeit für viele Anwendungen nicht ausreichend.

Die DE 100 14 194 offenbart eine Vorrichtung zur Bestimmung der Position einer Kolbenstange, bei der Markierungen in Form eines Bar-Codes auf der Kolbenstange aufgebracht sind. Ein optischer Sensor erfaßt die Markierungen und eine Auswerteeinheit ermittelt die (absolute) Position der Kolbenstange anhand des gelesenen Bar-Codes. Da für jeden Bar-Code mehrere Markierungen gelesen werden müssen, weist diese absolute Wegmessung eine geringe Genauigkeit auf.

In der EP 0 866 306 wird eine Vorrichtung zur Wegmessung beschrieben, bei der ein Reibrad auf einer Zylinderkolbenstange abrollt. Bei dieser nicht formschlüssigen Wegmessung kann es jedoch bei Verschmutzung zu Schlupfproblemen kommen, insbesondere auf einer glatten, öligen Zylinderstange eines Hubzylinders.

Insbesondere zur Achsvermessung von Fahrzeugen ist eine genaue Positionierung der einzelnen Fahrflächen bzw. Tragwerke untereinander mit einer maximalen Abweichung von unter 1 mm erforderlich. Für eine entsprechende Ansteuerung bzw. Regelung der Hubeinheiten ist hierzu eine präzise Messung der Hubhöhe notwendig.

Außer zur Einstellung der Hubhöhe von Hebebühnen gibt es im Maschinenbau vielfach das Problem, die Position eines beweglichen Körpers genau zu erfassen. Beispielsweise bei Fahrzeugen, Baumaschinen oder Arbeitsgeräten ist der Verfahrweg einer Verstelleinheit präzise zu erfassen. Oft muß die Messung berührungslos, verschleißfrei und wartungsarm erfolgen, weshalb bekannte Längen- und Winkelgeber ungeeignet sind.

Bei Hebebühnen mit mehreren separaten Hubeinheiten besteht zudem das Problem, die einzelnen Hubeinheiten zu synchronisieren. Bei bekannten Hebebühnen erfolgt dies über eine mechanische Verbindung zwischen den Hubeinheiten, den Plattformen und/oder den Tragwerken. Beispielsweise werden Tragwerke über eine Zahnstange und eine Welle "zwangssynchronisiert". Durch einen längenverschiebbaren Querbalken können auch die Hubwerke "höhensteif" verbunden werden.

Aus der DE 35 15 762 ist für hydraulische Hubwerke mit zwei Hubzylindern ein sogenanntes Geber/Nehmer-System zur Gleichlaufsteuerung der Hubzylinder bekannt. Die beiden miteinander verbundenen Hubzylinder sind so ausgelegt, daß das Volumen im Stangenraum des einen Zylinders dem Volumen des Kolbenraums im zweiten Zylinder entspricht. Durch diese Anordnung werden die Bewegungen der Kolbenstange hydraulisch synchronisiert. Ein unabhängiges Verfahren der Kolbenstangen der beiden Zylinder ist jedoch nicht mehr möglich.

Die Aufgabe der vorliegenden Erfindung ist es, ein Verfahren und eine Vorrichtung zur genauen Ermittlung der Position eines beweglichen Körpers, insbesondere einer Kolbenstange eines Hydraulikzylinders, sowie eine Steuervorrichtung zur robusten und genauen Steuerung des Verfahrwegs von Hydraulikzylindern zu schaffen.

Diese Aufgabe wird durch die unabhängigen Patentansprüche gelöst. Die abhängigen Patentansprüche betreffen vorteilhafte Weiterbildungen der Erfindung.

Die erfindungsgemäße Meßvorrichtung zur Ermittlung der Position x eines beweglichen Körpers mit mehreren Wegmarken weist einen Sensor auf, der einen zumindest eine Wegmarke und/oder zumindest einen Zwischenraum zwischen den Wegmarken umfassenden Bereich des Körpers erfaßt. Als Wegmarken sind alle Arten von Markierungen auf dem Körper geeignet, die von dem Sensor erfaßt werden können. Geeignete Markierungen sind beispielsweise optische oder magnetische Markierungen. Der Sensor detektiert das Vorhandensein von einer oder mehren der Wegmarken in dem vom Sensor erfaßten Bereich des Körpers.

Das Sensorsignal liefert einen Wert für den Anteil an dem Sensorerfassungsbereich, der von einer Wegmarke bzw. mehreren Wegmarken eingenommen wird. Umgekehrt kann aus dem Sensorsignal auch ein Wert für den Anteil, der von Zwischenräumen zwischen den Wegmarken bzw. den nicht von Markierungen abgedeckten Teilen des Körpers eingenommen wird, ermittelt werden. Die Art des verwendeten Sensors entspricht zweckmäßigerweise der Art der verwendeten Markierung, beispielsweise optisch oder magnetisch. Prinzipiell sind alle Sensoren möglich, die den Anteil der Markierungen am vom Sensor erfaßten Bereich ermitteln können. Solche Sensoren können unterschiedliche Materialeigenschaften von Wegmarken und Zwischenräumen auswerten, um den Anteil der Wegmarken am erfaßten Bereich des Körpers zu ermitteln.

Eine Auswertevorrichtung ermittelt die Position $x$ des beweglichen Körpers anhand des Ausgangssignals $S$ des Sensors. Um eine Bewegung des Körpers um ein Vielfaches des Abstands zwischen den Wegmarken zu erfassen, kann die Auswertevorrichtung einen Zählerstand $Z$ unter Berücksichtigung der Maxima und/oder Minima des Sensorausgangssignals $S$ (inkrementale Wegmessung) verändern.

Wenn durch die Bewegung des Körpers Wegmarken den vom Sensor erfaßten Bereich passieren, treten Maxima bzw. Minima des Sensorsignals $S$ auf. Je nach Art der Markierung und des verwendeten Sensors entsteht ein Maximum oder ein Minimum im Sensorsignal $S$, wenn der Anteil der Markierung an dem vom Sensor erfaßten Bereich maximal oder minimal wird. Beispielsweise kann ein Minimum des Sensorsignals $S$ vorliegen, wenn der vom Sensor erfaßte Bereich vollständig von einer Wegmarke umfaßt wird. Liegt dagegen keine Wegmarke in dem vom Sensor erfaßten Bereich, kann ein Maximum des Sensorsignals $S$ vorliegen.

Die Auswertevorrichtung ermittelt Maxima und/oder Minima des Sensorausgangssignals $S$ und zählt bei einer Bewegung des Körpers die Anzahl dieser Extremwerte im Sensorsignal $S$. Ein erster Anteil an der Position des Körpers ergibt sich aus dem Zählerstand $Z$ und dem Wegmarkenabstand $d$: $x_1 = Z \cdot d$.

Entspricht der Abstand $d$ zwischen den Wegmarken nicht der Abmessung $a$ der Wegmarken in Bewegungsrichtung des Körpers, sind Maxima und Minima getrennt auszuwerten, zu zählen und mit den entsprechenden Abmessungen von Wegmarken und Zwischenräumen zu verrechnen.

Um die Lage des Sensors in bezug auf eine vom Sensor erfaßte Wegmarke zu bestimmen, kann die Auswertevorrichtung anhand des Signalwerts des Sensorausgangssignals $S$ den Zusammenhang zwischen der vom Sensor erfaßten Fläche Aw von Wegmarke und der Fläche Az des vom Sensor erfaßten Zwischenraums ermitteln. Da das Sensorsignal $S$ durch die (Material-)Unterschiede von Wegmarke und Zwischenraum beeinflußt wird, kann anhand des Signalwerts des Signals $S$ der jeweilige Anteil von Markierung und Zwischenraum in dem vom Sensor erfaßten Bereich bestimmt werden. Bei geeigneter Abstimmung von Markierungen und Sensor folgt der Zusammenhang zwischen dem Signalwert des Sensorausgangssignals $S$ und dem Anteil der vom Sensor erfaßten Flächen $A_W$, $A_Z$ einer bekannten Funktion. Beispielsweise wächst die von einem Sensor mit rechteckigem Erfassungsbereich erfaßte Fläche einer rechteckigen Markierung linear mit dem Weg einer geradlinigen Bewegung des Körpers an, bis der maximal mögliche Bereich der Markierung von dem Sensor erfaßt wird. Bei einer weiteren Verschiebung des Körpers verringert sich der vom Sensor erfaßte Bereich der Markierung wiederum linear mit dem zurückgelegten Weg. Aufgrund des bekannten Zusammenhangs zwischen dem Signalwert $S$ und dem Anteil der vom Sensor erfaßten Markierung kann die Lage des Sensors relativ zur Markierung ermittelt werden. Für diesen zweiten Anteil an der Position des Körpers gilt: $x_2 = f(S)$.

Die genaue Position $x$ des Körpers kann von der Auswertevorrichtung zu $x = x_1 + x_2$ bestimmt werden. Dabei gibt $x_1$ die ungefähre Position in Vielfachen des Wegmarkenabstands $d$ und $x_2$ einen Korrekturwert relativ zu einer der Wegmarken an. Durch diese kombinierte Inkremental-/Absolutwegmessung kann die Position des beweglichen Körpers mit einer großen Genauigkeit ermittelt werden. Die maximal mögliche Wegauflösung wird durch die Auflösung des Sensors und die Genauigkeit der Auswertevorrichtung begrenzt. Im Gegensatz zum bekannten Stand der Technik ist eine Positionsmessung mit einer Genauigkeit von Bruchteilen des Wegmarkenrasters möglich. Weiterhin erfolgt die erfindungsgemäße Positionsmessung berührungslos, wartungs- und verschleißfrei.

Ein bevorzugter Sensor ist als optischer Reflexionssensor ausgebildet. Der Reflexionssensor emittiert Licht und erfaßt die Menge des vom Körper bzw. den Markierungen reflektierten Lichts. Die Menge des reflektierten Lichts ist zweckmäßigerweise proportional zu dem Ausgangssignal $S$ des Sensors. Das emittierte Licht kann aus dem sichtbaren Wellenlängenspektrum stammen. Der Sensor kann aber auch mit nicht sichtbaren elektromagnetischen Wellen, insbesondere im Infrarotbereich, arbeiten.

Vorzugsweise ist der Reflexionsgrad $r_w$ der Wegmarken für das vom Sensor emittierte Licht unterschiedlich vom Reflexionsgrad rz des zwischen den Wegmarken liegenden Zwischenraums. Durch das unterschiedliche Reflexionsverhalten von Markierungen und Zwischenraum entsteht der gewünschte Zusammenhang zwischen dem reflektierten Licht und den Anteilen der vom Sensor erfaßten Flächen $A_W$ von Wegmarke und $A_Z$ von Zwischenraum.

Sind die Wegmarken in Bewegungsrichtung des Körpers in einem gleichmäßigen Abstand $d$ angeordnet und gleichförmig ausgebildet, entsteht ein einfacher Zusammenhang zwischen der Position des Körpers und dem Zählerstand Z. Um die Auswertung des Sensorsignals S weiter zu vereinfachen, kann der Abstand d zwischen den Wegmarken der Abmessung a der Wegmarken in Bewegungsrichtung des Körpers ensprechen. Auf der Körperoberfläche entsteht so ein periodischer Maßstab mit einer Teilung 2d. Zweckmäßigerweise sind die Wegmarken als rechteckige oder quadratische Markierungen ausgebildet. Um ausgeprägte Maxima und Minima zu erhalten, kann der vom Sensor erfaßte Bereich des Körpers der Fläche einer Wegmarke entsprechen. Sind Wegmarken und Zwischenräume gleichförmig und gleich groß ausgebildet, so treten deutliche Maxima bzw. Minima des Sensorsignals S auf, wenn der vom Sensor beleuchtete Bereich genau eine Wegmarke bzw. genau einen Zwischenraum umfaßt.

Vorzugsweise erfaßt der Sensor eine annähernd kreisförmige Fläche des Körpers. Ein kreisförmiger Erfassungsbereich entspricht den Abstrahl- und Erfassungscharakteristiken von vielen optischen Sensoren und ermöglicht eine einfache Anordnung des Sensors in einer Bohrung. Falls die Wegmarken auf einem nicht-ebenen Teil des beweglichen Körpers, beispielsweise einer Zylinderoberfläche, angeordnet sind, kann der vom Sensor erfaßte Bereich auch die entsprechende Schnittfläche eines Zylinders bzw. Kegelstumpfes mit der Oberfläche des Körpers sein. Ist der Radius einer zylindrischen Körperoberfläche viel größer als der Radius des Sensorerfassungsbereichs, wird ein annähernd kreisförmiger Bereich des Körpers erfaßt.

Vorzugsweise sind mindestens zwei Sensoren vorgesehen, die in Bewegungsrichtung des Körpers um das ganzzahlige Vielfache des halben Wegmarkenabstands d versetzt sind. Die Auswertevorrichtung kann die Bewegungsrichtung des Körpers anhand der Phasenbeziehung der Sensoren ermitteln. In einer Bewegungsrichtung eilt das Signal eines Sensors gegenüber dem Signal des anderen Sensors vor und umgekehrt. Zweckmäßigerweise ändert die Auswertevorrichtung den Zählerstand Z entsprechend der Bewegungsrichtung des Körpers. Die Auswertevorrichtung kann die Position des Körpers anhand der Ausgangssignale $S_a$, $S_b$ der Sensoren ermitteln. Es ist möglich, für jeden Sensor einen eigenen Zählerstand $Z_a$, $Z_b$ zum Zählen der Maxima und/oder Minima des jeweiligen Sensorausgangssignals $S_a$, $S_b$ zu führen, oder einen gemeinsamen Zähler zu verwenden.

Die Auswertevorrichtung kann auch eine Signalverarbeitungseinrichtung aufweisen, die das Sensorausgangssignal S, $S_a$, $S_b$ verarbeitet, um Signalamplituden zu normieren, Offsets bzw. Mittelwerte zu entfernen und/oder Störungen im Signal zu reduzieren. Beispielsweise können die Signalamplituden der einzelnen Sensoren vor der Weiterverarbeitung normiert und/ oder aneinander angeglichen werden. Es kann auch zweckmäßig sein, die Mittelwerte der Sensorsignale zu ermitteln, und die Mittelwerte von dem jeweiligen Signal abzuziehen. Durch eine Filterung des Signals, beispielsweise durch ein Tiefpaßfilter, können Signalstörungen entfernt werden.

Die Auswertevorrichtung kann eine Divisionseinrichtung aufweisen, die das Ausgangssignal $S_a$ eines ersten Sensors durch das Ausgangssignal $S_b$ eines zweiten Sensors dividiert. Diese Division ist besonders dann zweckmäßig, wenn die Sensorsignale $S_a$, $S_b$ eine bestimmte Beziehung zueinander aufweisen, beispielsweise eine Phasenbeziehung, und durch die Division die Anteile der von den Sensoren erfaßten Flächen $A_W$, $A_Z$ ermittelt werden können. Sind die von den Sensoren erfaßten Flächen annähernd kreisförmig, so kann der Zusammenhang zwischen der relativen Lage von Sensor zu Markierung einerseits und der vom Sensor erfaßten Fläche der Markierung andererseits durch eine sinus- bzw. cosinusförmige Funktion angenähert werden. In diesem Fall kann die Auswertevorrichtung durch Auswertung von trigonometrischen Funktionen der sinus- bzw. cosinusförmigen Sendersignale $S_a$, $S_b$ die Anteile der Flächen $A_W$, $A_Z$ bzw. die relative Lage von Wegmarkierung und Sensor ermitteln.

Um die Phasenbeziehung zwischen den mit dem Körper bewegten Wegmarkierungen und den Sensoren zu bestimmen, können die sinus- bzw. cosinusförmigen Sensorausgangssignale $S_a$, $S_b$ dividiert und auf das erhaltene Divisionssignal D die Arkustangens-Funktion angewendet werden. Durch die Division der sinus- bzw. cosinusförmigen Signale $S_a$, $S_b$ entsteht ein annähernd tangensförmiges Divisionssignal D. Nach der Anwendung der Arkustangens-Funktion auf das Divisionssignal D entsteht ein stückweise weitgehend lineares Signal mit einer Periode d. Dieses sägezahnförmige Signal I kann zur linearen Interpolation der relativen Lagebeziehung zwischen Interpolations-Wegmarken und Sensoren herangezogen werden.

Die Auswertevorrichtung kann auch eine Signalkorrektureinrichtung aufweisen, die erfaßte Sensorsignalwerte korrigiert bzw. normiert. Die Signalkorrektureinrichtung kann beispielsweise, wenn die Anordnung bzw. Ausrichtung der Sensoren nicht exakt ist, die Phasenlage der Sensorsignale $S_a$, $S_b$ korrigieren, oder unterschiedliche Amplituden der einzelnen Sensoren einander angleichen.

Zweckmäßigerweise ist eine Speichereinrichtung vorgesehen, welche die erfaßten Signalwerte speichert. Die Speichereinrichtung kann auch Maximalwerte und/oder Minimalwerte des Sensorausgangssignals S bzw. der Sensorausgangssignale $S_a$, $S_b$ speichern. Die Speicherung dieser Werte kann zum Zwecke einer späteren Signalkorrektur erfolgen. Maximal- bzw. Minimalwerte können für einzelne Signalperioden oder einen längeren Signalverlauf detektiert und gespeichert werden (Hüllkurve).

Zweckmäßigerweise vergleicht die Signalkorrektureinrichtung den Wert eines erfaßten Sensorausgangssignals mit einem gespeicherten Wert einer vorherigen Bewegung des Körpers. Der erfaßte Signalwert kann unter Berücksichtigung der gespeicherten Werte korrigiert bzw. normiert werden. Dies ist besonders dann sinnvoll, wenn der bewegliche Körper wiederholt die gleiche Bewegung ausführt. Durch den Vergleich der erfaßten Signalwerte mit gespeicherten Werten können Unterschiede im Bewegungsverlauf und/oder in den Sensorsignalen im Verhältnis zu einer "Referenzbewegung" erkannt werden. Beispielsweise ist es möglich, eine Alterung bzw. Verschmutzung der Sensoren zu erkennen und zu korrigieren. Dies ist besonders bei optischen Sensoren zweckmäßig, da das Signal des reflektierten Lichts durch Verschmutzungen auf der Oberfläche des Körpers bzw. der Wegmarken beeinträchtigt wird. Durch einen Vergleich eines erfaßten Signalwerts mit dem entsprechenden Wert einer vorherigen "Referenzbewegung" können Signalbeeinträchtigungen durch Verschmutzung des Sensors und/oder des Körpers korrigiert werden.

Vorzugsweise werden die Amplituden des erfaßten Sensorsignals an die abgespeicherten "Referenzamplituden" angepaßt. Da die einzelnen Markierungen und Zwischenräume leichte Unterschiede im Reflexionsverhalten aufweisen können, ist es zweckmäßig, die entsprechenden Hüllkurven der Signale für die Referenzbewegung zu speichern, um später eine abschnittsweise Signalkorrektur vornehmen zu können. Um beispielsweise eine unerwünschte Amplitudenmodulation des Signals für einen kreisförmigen Sensorerfassungsbereich zu korrigieren, können die sinusförmigen Sensorsignale für jede Periode einzeln korrigiert werden. Diese Korrekturen werden zweckmäßigerweise unter Berücksichtigung der Nulldurchgänge des Signals durchgeführt, um Phasensprünge zu vermeiden.

Die Signalkorrektureinrichtung kann auch das Divisionssignal D anhand von vorher gespeicherten Werten des Divisionssignals einer "Referenzbewegung" korrigieren bzw. normieren. Zweckmäßigerweise werden hierzu Signalwerte, Maximal- und/oder Minimalwerte des Divisionssignals D in der Speichereinrichtung gespeichert. Besonders zweckmäßig ist es, das Interpolationssignal I, dessen Maxima und/oder Minima bzw. dessen Hüllkurve zu speichern. Anhand der gespeicherten Werte des Interpolationssignals I können anschließend die stückweise linearen Abschnitte des aktuell erhaltenen Interpolationssignals I normiert werden. Für jeden Abschnitt des Interpolationssignals I können beispielsweise der Maximalwert und der Minimalwert des Referenzsignals gespeichert werden. Der entsprechende Abschnitt des aktuell erhaltenen Signals I kann unter Berücksichtigung des abgespeicherten Maximalwerts und des abgespeicherten Minimalwerts normiert werden, um Signalstörungen oder -beeinträchtigungen zu kompensieren.

Zur Korrektur der Sensorsignale kann auch ein weiterer Korrektur-Sensor vorgesehen sein, der in Bewegungsrichtung des Körpers in einem bestimmten Abstand von dem bzw. den anderen Sensoren angeordnet ist. Bei einer Bewegung des Körpers 'tastet' der vorauseilende Korrektursensor die zu erwartenden Signalwerte der anderen Sensoren im voraus ab. Das Signal des Korrektur-Sensors kann von der Signalkorrektureinrichtung zur Korrektur bzw. zur Normierung des Signals bzw. der Signale der anderen Sensoren verwendet werden. Zweckmäßigerweise bestimmt die Signalkorrektureinrichtung anhand der vorabgetasteten Signalwerte des Korrektursensors die Maximal und/oder Minimalwerte der anderen Sensoren. Um Signalschwankungen zu kompensieren, können anhand der vorausbestimmten Maximal- und/oder Minimalwerte für die einzelnen Abschnitte der Meßstrecke die Sensorsignale $S_a$, $S_b$, das Divisionssignal D und/oder das Interpolationssignal I korrigiert bzw. normiert werden. In Abhängigkeit von der Bewegungsrichtung des Körpers kann der jeweils vorauseilende Sensor als Korrektur-Sensor für die anderen Sensoren verwendet werden. Vorzugsweise weist die Meßvorrichtung drei Sensoren auf, wobei jeweils einer zur Vorbestimmung der Signalwerte dient.

Gemäß einer bevorzugten Ausführungsform der Meßvorrichtung ist der Sensor als Reflexlichtschranke mit einer Sendeleuchtdiode und einer Empfangsphotodiode ausgebildet. Die Sendeleuchtdiode und die Empfangsphotodiode sind derart angeordnet, daß sie den zu erfassenden Bereich des Körpers beleuchten bzw. das reflektierte Licht erfassen. Zweckmäßigerweise werden Infrarotleuchtdioden verwendet, da diese eine hohe Lichtleistung abstrahlen und eine sehr schmalbandige Leistungskurve aufweisen. Siliciumphotodioden besitzen im Infrarotwellenlängenbereich ihre größte Empfindlichkeit. Um einen größtmöglichen Anteil des abgestrahlen Lichts auf den zu erfassenden Bereich des Körpers zu konzentrieren, ist eine entsprechende Abstrahlcharakteristik der Leuchtdiode von Vorteil. Der Photostrom der Empfangsphotodiode kann von einem Transimpedanzverstärker bzw. Strom-/Spannungs-Wandler verstärkt werden.

Die Auswertevorrichtung kann einen Analog/Digital-Wandler und einen Mikrocontroller aufweisen. Gegebenenfalls kann ein Anti-Aliasing-Filter zur Bandbegrenzung vorgesehen sein. Der Mikrocontroller kann die Maxima und/oder Minima der digitalisierten Signale detektieren und den Zählerstand Z für die Anzahl der Extremwerte führen. Der Mikrocontroller kann auch die Ermittlung der Anteile der Flächen Aw, Az von Wegmarke und Zwischenraum, die Division der Sensorsignale und die Bestimmung der Position x des Körpers sowie ggf. die Korrektur und Speicherung von Signalen durchführen.

Die Auswertevorrichtung kann auch als entsprechend programmierter Computer, eine programmierbare Steuerung oder eine programmierbare Schaltung (z.B. PLD, FPGA) realisiert werden. Selbstverständlich können auch Komponenten der erfindungsgemäßen Meßvorrichtung auf einem oder mehreren integrierten Schaltkreis (IC) realisiert werden.

Es ist vorteilhaft, wenn die Wegmarken durch Lasergravur auf dem bewegten Körper aufgebracht sind. Durch die hohe Wärmeenergie des Laserstrahls wird die Oberflächenstruktur des Körpers an den gewünschten Stellen dauerhaft verändert. Die bearbeiteten Stellen sind aufgerauht und matt, während die unbearbeiteten Zwischenräume weiterhin ihre ursprünglichen Reflexionseigenschaften aufweisen. Im Gegensatz zum Aufbringen der Markierungen durch Auftragen von Farbe oder einem Anbringen von Markierungen aus einem anderen Material entstehen bei der Lasergravur keine Unebenheiten auf der Körperoberfläche. Derartige Unebenheiten würden zu Problemen bei der Bewegung des Körpers durch eine Abdichtung führen. Weiterhin ist eine Lasergravur verschleißfrei und kann nicht durch Abrieb beschädigt werden. Die Wegmarken können auch durch ein Ätzen der Oberfläche des Körper aufgebracht werden.

Die Wegmarken können vorteilhafterweise auf der Zylinderoberfläche einer Kolbenstange eines Hydraulikzylinders angeordnet sein, um die Position der Kolbenstange bzw. ihren Verfahrweg zu erfassen. Durch die erfindungsgemäße Auswertung der Sensorsignale kann die Kolbenstangenposition mit hoher Genauigkeit erfaßt werden. Um den Sensor vor Beschädigung und/oder Verschmutzung zu schützen, kann dieser in einem Zylinderkopf des Hydraulikzylinders angeordnet sein.

Eine erfindungsgemäße Steuervorrichtung zur Steuerung des Verfahrwegs x von Hydraulikzylindern weist eine Meßvorrichtung zur Erfassung des Verfahrwegs der Kolbenstange des Hydraulikzylinders, eine Steuereinheit und eine Hydraulikeinheit zur Erzeugung eines Fluiddrucks zur Betätigung des Hydraulikzylinders auf. Die Steuereinheit vergleicht den von der Meßvorrichtung ermittelten Verfahrweg x der Kolbenstange mit einem vorgegebenen Soll-Weg $X_0$ und steuert die Hydraulikeinheit zur Erzeugung eines entsprechenden Hydraulikdrucks und/oder ein Hydraulikventil an. Durch Druckbeaufschlagung eines mit der Kolbenstange verbundenen Kolbens des Hydraulikzylinders kann die Kolbenstange verfahren werden. Die Ansteuerung der Hydraulikeinheit und/oder des Hydraulikventils von der Steuereinheit erfolgt derart, daß der vorgegebene Soll-Verfahrweg $X_0$ erzielt wird. Die Steuereinheit kann dazu einen an sich bekannten Regler mit einer vorgegebenen Reglercharakteristik aufweisen.

Die Steuervorrichtung kann auch mehrere von der Hydraulikeinheit über ein Hydraulikventil betätigte Hydraulikzylinder ansteuern. Die jeweiligen Positionen der Kolbenstangen der Hydraulikzylinder werden von der Meßvorrichtung ermittelt. Die Steuereinheit steuert die Hydraulikeinheit und/oder das Ventil derart an, daß die relativen Positionen der Kolbenstangen zueinander eine vorgegebene Beziehung aufweisen. Vorzugsweise erfolgt die Regelung derart, daß die Kolbenstangen gleich weit aus ihrem jeweiligen Hydraulikzylinder herausbewegt sind bzw. einen gleichen Verfahrweg aufweisen. Durch die Steuereinheit können auch die Geschwindigkeiten der Bewegungen der Kolbenstangen geregelt werden, insbesondere um eine gleiche Bewegung der Kolbenstangen zu erzielen. Durch die erfindungsgemäße Steuereinheit können so die Verfahrwege und/oder Verfahrgeschwindigkeiten von mehreren Hydraulikzylindern synchronisiert werden. Dies ermöglicht ein absolut gleichmäßiges Anheben bzw. Absenken von Gegenständen bzw. Plattformen, die von mehreren Hydraulikzylindern bewegt werden. Eine derartige Synchronisation von Hydraulikzylindern ist besonders zum Anheben oder Absenken von Hebebühnen oder Arbeitsplattformen zweckmäßig. Auch zur Steuerung von Baufahrzeugen, Arbeitsgeräten oder anderen Maschinen mit verfahrbaren Elementen ist die erfindungsgemäße Steuervorrichtung geeignet.

Die Steuervorrichtung kann zumindest einen von der Steuereinheit angesteuerten Leistungsverstärker und zumindest ein von diesem angesteuertes Proportionalventil aufweisen. Das Proportionalventil ist in der Hydraulikleitung zwischen Hydraulikeinheit und Hydraulikzylinder angeordnet und läßt bei Betätigung Fluid bzw. Druck aus der Hydraulikleitung ab. Um den vorgegebenen Soll-Verfahrweg $X_0$ der Kolbenstange zu erzielen, steuert die Steuereinheit den Leistungsverstärker entsprechend an. In Abhängigkeit von den Signalen des Leistungsverstärkers wird das Proportionalventil betätigt, so daß sich der gewünschte Druck im Hydraulikzylinder einstellt. Da die Druckregelung durch das Proportionalventil erfolgt, kann eine Hydraulikeinheit, die konstanten Druck erzeugt, verwendet werden.

Um eine gleichmäßige Bewegung der einzelnen Teile einer mehrteilig ausgebildeten Hebebühne zu erzielen, kann die Steuereinheit eine getrennte Regelung der Hydraulikzylinder ausführen. Durch die Regelung kann insbesondere der Verfahrweg und/oder die Geschwindigkeit der Verstellbewegung synchronisiert werden. Die Steuereinheit kann dazu die von der Meßvorrichtung ermittelten Verfahrwege und/oder deren zeitliche Änderungen miteinander vergleichen und Abweichungen ermitteln. Bei festgestellten Abweichungen kann die Steuereinheit beispielsweise einen vorauseilenden Hydraulikzylinder kurzfristig anhalten und/oder dessen Verstellgeschwindigkeit beeinflussen. Dies kann durch die Betätigung von Hydraulikventilen erfolgen. Vorzugsweise führt die Steuereinheit die Regelung aus, um eine gleichmäßige Höhe h der Plattform bzw. gleichmäßige Hubhöhen $h_a$, $h_b$ von Plattformen von mehrteiligen Hebebühnen zu erzielen. Durch die präzise Wegmessung und die damit mögliche genaue Regelung der Hubhöhe bzw. der Hubhöhen kann die Hebebühne sehr genau positioniert werden. Dies ist besonders bei der Durchführung von Messungen an dem auf der Hebebühne aufstehenden oder von ihr angehobenen Gegenstand von Bedeutung. Durch die erfindungsgemäße Steuervorrichtung können beispielsweise mehrteilige Fahrflächen von Kraftfahrzeughebebühnen so präzise positioniert werden, daß eine Achsvermessung an Fahrzeugen möglich ist.

Das erfindungsgemäße Meßverfahren zur Ermittlung der Position x eines beweglichen Körpers mit mehreren Wegmarken kann einen oder mehrere der folgenden Schritte umfassen:

-    Erfassen einer Signalgröße S des Lichts, das von einem Bereich des Körpers reflektiert wird, der zumindest eine Wegmarke und/oder zumindest einen Zwischenraum zwischen den Wegmarken umfaßt;
-    Verändern eines Zählerstands Z unter Berücksichtigung des erfaßten Signals S, um eine Bewegung des Körpers zu erfassen;
-    Ermitteln des Zusammenhangs zwischen den erfaßten Flächen $A_W$, $A_Z$ von Wegmarken und Zwischenräumen anhand des erfaßten Signalwertes,
-    Ermitteln der Position x des Körpers anhand des Zählerstands Z und des Zusammenhangs zwischen den erfaßten Flächen $A_W$, $A_Z$.

Da bei einer Bewegung des Körpers die in Bewegungsrichtung alternierend angeordneten Markierungen den bestrahlten Bereich des Körpers passieren, ändert sich die Signalgröße S des reflektierten Lichts. Zweckmäßig ist es, die Markierungen so zu gestalten, daß sie ein anderes Reflexionsverhalten als der Körper aufweisen. Durch den unterschiedlichen Anteil, den die Markierungen an dem erfaßten Bereich einnehmen, wird die Menge des reflektierten Lichts moduliert. Der Zählerstand Z kann vorzugsweise anhand der Maxima und/oder Minima des Signals S verändert werden. Die Lage des bestrahlten Bereichs des Körpers relativ zur erfaßten Wegmarke kann aus dem Zusammenhang zwischen den erfaßten Flächen $A_W$, $A_Z$ bzw. den Anteilen der Flächen $A_W$, $A_Z$ am Sensorerfassungsbereich ermittelt werden.

Durch das erfindungsgemäße Meßverfahren ist es möglich, die Position x eines bewegten Körpers mit einer Genauigkeit zu ermitteln, die Bruchteile des Abstands d zwischen den Wegmarken beträgt. Weiterhin ist das Meßverfahren berührungslos und wartungsfrei.

Zweckmäßigerweise werden Signale $S_a$, $S_b$ für das reflektierte Licht von zumindest zwei Bereichen des Körpers erfaßt. Die Bereiche sind in Bewegungsrichtung des Körpers um das Vielfache des halben Wegmarkenabstands d versetzt. Anhand der Phasenbeziehung zwischen den erfaßten Signalen $S_a$, $S_b$ kann die Bewegungsrichtung des Körpers ermittelt werden. Der Zählerstand Z wird beim Auftreten eines Maximas oder Minimas entsprechend der Bewegungsrichtung des Körpers inkrementiert oder dekrementiert.

Um das Verhältnis der Flächen $A_W$, $A_Z$ von erfaßter Wegmarke und erfaßtem Zwischenraum in dem ausgewerteten Bereich des Körpers zu ermitteln, kann ein erstes erfaßtes Signal $S_a$ durch ein zweites erfaßtes Signal $S_b$ dividiert werden. Aus dem erhaltenen Divisionssignal D kann nach Anwendung der Arkustangensfunktion ein Interpolationssignal I erhalten werden.

Falls der bestrahlte Bereich des Körpers eine annähernd kreisförmige Fläche aufweist, kann aus dem Interpolationssignal I durch lineare Interpolation in stückweise weitgehend linearen Abschnitten des Interpolationssignals die genaue Position x des Körpers ermittelt werden.

Die stückweise geraden Abschnitte des Interpolationssignals I entsprechen jeweils einem Abschnitt der Meßstrecke von der Mitte einer Markierung zur Mitte des darauffolgenden Zwischenraums. An den jeweiligen Endpunkten der Abschnitte weist das Sensorsignal einen Maximal- bzw. Minimalwert auf. Der Erfassungsbereich des Sensors umfaßt in diesem Fall einmal den maximalen Anteil einer Markierung und in dem anderen Fall den minimalen Anteil einer Markierung. Da der zweite Sensor um ein Vielfaches des halben Wegmarkenabstands d versetzt angeordnet ist, erfaßt der zweite Sensor an den beiden Enden eines Abschnitts jeweils hälftig eine Markierung und einen Zwischenraum. Die relative Lage des Sensors zu den Wegmarken kann durch eine lineare Interpolation zwischen den Abschnittsenden ermittelt werden.

Selbstverständlich kann der Zählerstand Z auch anhand der Maxima und/oder Minima des Divisionssignals D bzw. des Interpolationssignals I verändert werden. Beispielsweise kann der Zähler an einer Bereichsgrenze des Interpolationssignals beim Auftreten eines Sprungs von einem Maximum zu einem Minimum oder umgekehrt inkrementiert oder dekrementiert werden.

Ein erfindungsgemäßes Steuerverfahren zur Steuerung des Verfahrwegs x von Hydraulikzylindern ermittelt die Position der Kolbenstange des Hydraulikzylinders nach dem beanspruchten Meßverfahren. Die ermittelte Position der Kolbenstange wird mit einer vorgegebenen Sollposition $X_0$ verglichen und eine Hydraulikeinheit zur Erzeugung eines Fluiddrucks und/oder ein Hydraulikventil wird angesteuert, um die vorgegebene Sollposition $X_0$ zu erzielen.

Die Erfindung beschränkt sich nicht auf die im folgenden erläuterten Ausführungsbeispiele, sondern erfaßt auch solche Kombinationen, die ein Fachmann der Anmeldung entnehmen kann. Es zeigen:

| | |
|---|---|
| Fig. 1 | schematisch ein Ausführungsbeispiel einer erfindungsgemäßen Meßvorrichtung; |
| Fig. 2a, b | schematische Darstellungen zur Erläuterung der vom Sensor erfaßten Flächen von Wegmarke und Zwischenraum; |
| Fig. 3 | einen Graphen zur Darstellung der Flächenfunktion; |
| Fig. 4a, b | Signalverläufe einer erfindungsgemäßen Meßvorrichtung; |
| Fig. 5 | eine schematische Darstellung einer Reflexlichtschranke; |
| Fig. 6 | eine schematische Darstellung einer Sensoranordnung in einem Zylinderkopf; |
| Fig. 7 | ein schematisches Blockschaltbild einer erfindungsgemäßen Steuervorrichtung; |
| Fig. 8 | schematisch ein Ausführungsbeispiel einer erfindungsgemäßen Steuervorrich- |

tung;

Fig. 9      schematisch ein weiteres Ausführungsbeispiel einer erfindungsgemäßen Steuervorrichtung und

Fig. 10     ein schematisches Hydraulikschaltbild für eine erfindungsgemäße Steuervorrichtung.

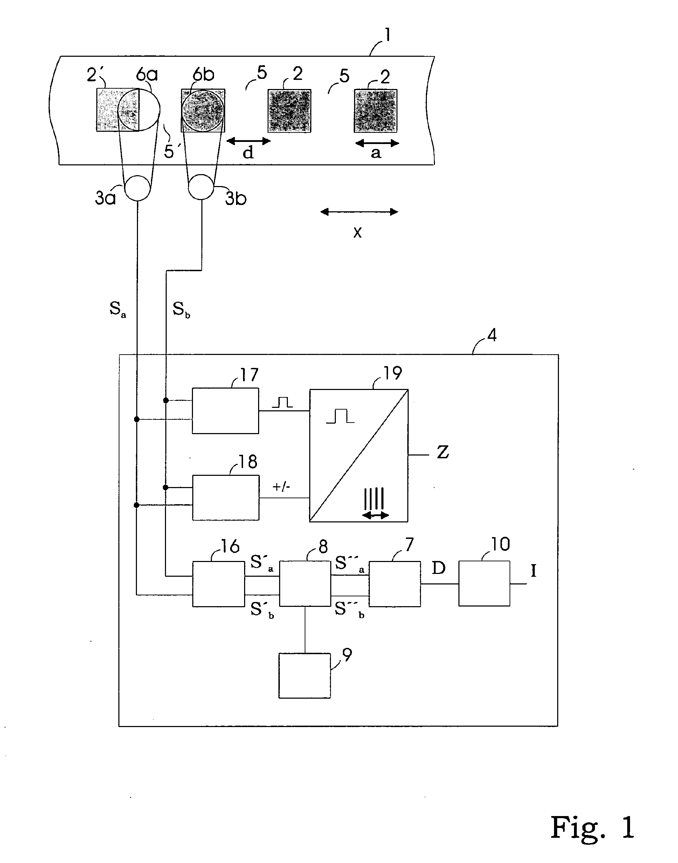

Die Fig. 1 zeigt schematisch ein Ausführungsbeispiel einer erfindungsgemäßen Meßvorrichtung zur Ermittlung der Position x eines beweglichen Körpers 1. Der Körper 1 weist auf seiner Oberfläche mehrere in Bewegungsrichtung des Körpers 1 in einem gleichmäßigen Abstand d angeordnete Wegmarken 2 auf. Die Wegmarken 2 sind als Quadrate oder Rechtecke mit einer Kantenlänge bzw. Breite a, die dem Abstand d zwischen den Wegmarken 2 entspricht, ausgebildet. Die Wegmarken 2 wurden beispielsweise durch Lasergravur des metallischen Körpers 1 erzeugt. In Bewegungsrichtung des Körpers 1 liegt eine gleichmäßige alternierende Folge von Wegmarken 2 und Zwischenräumen 5 vor.

In der Nähe des Körpers 1 sind zwei optische Sensoren 3a, 3b vorgesehen, die Licht emittieren und die Menge des reflektierten Lichts erfassen. Der Abstand zwischen den beiden Sensoren 3a, 3b beträgt ein Vielfaches des halben Wegmarkenabstands d. Jeder Sensor 3a, 3b erfaßt einen bestimmten, annähernd kreisförmigen Bereich 6a, 6b des Körpers 1. Die Sensorerfassungsbereiche 6a, 6b sind so gewählt, daß sie zumindest eine Wegmarke 2 und/oder zumindest einen Zwischenraum 5 umfassen. Der Sensorerfassungsbereich 6a kann vollständig in dem Bereich einer einzelnen Markierung 2' oder eines Zwischenraums 5' liegen oder Teile von Markierung 2' und Zwischenraum 5' abdecken. Vorzugsweise entspricht die Abmessung c des Sensorerfassungsbereichs 6a in Bewegungsrichtung des Körpers 1 der Kantenlänge a der Wegmarken bzw. dem Wegmarkenabstand d. Im vorliegenden Fall entspricht der Durchmesser c des kreisförmigen Sensorerfassungsbereichs 6a dem Wegmarkenabstand d.

Da Wegmarken 2 und Zwischenräume 5 ein unterschiedliches Reflexionsverhalten für das von den optischen Sensoren 3a, 3b emittierte Licht aufweisen, sind die Signalwerte der Sensorausgangssignale $S_a$, $S_b$ abhängig von der Lage der Sensorerfassungsbereiche 6a, 6b in bezug auf Wegmarken 2 und Zwischenräume 5. Je nach Anteil der Fläche $A_W$ von erfaßter Wegmarke 2' bzw. der Fläche $A_Z$ von erfaßtem Zwischenraum 5' am Sensorerfassungsbereich 6a wird mehr oder weniger viel Licht zum Sensor 3a reflektiert. Der Menge des reflektierten Lichts der Sensoren 3a, 3b entsprechen die Signalwerte $S_a$, $S_b$, die von der Auswertevorrichtung 4 zur Ermittlung der Position x verarbeitet werden.

Bei einer Bewegung des Körpers 1 treten in dem Sensorsignal S dann Maxima auf, wenn der Sensorerfassungsbereich 6 einen maximalen Anteil der Fläche umfaßt, die bessere Reflexionseigenschaften aufweist, d.h. zum Beispiel vollständig in einem Zwischenraum 5 liegt. Der Abstand zwischen zwei Maxima beträgt deshalb 2d.

Die Auswertevorrichtung 4 weist eine Minimal-/Maximalwert-Detektionseinrichtung 17 auf, die Maxima und/oder Minima in den Sensorausgangssignalen $S_a$, $S_b$ erkennt. Weiterhin ist eine Phasenauswerteeinrichtung 18 vorgesehen, die die Phasenbeziehung der Sensorausgangssignale $S_a$, $S_b$ ermittelt, um die Bewegungsrichtung des Körpers 1 zu bestimmen. Abhängig von der Bewegungsrichtung des Körpers inkrementiert oder dekrementiert die Auswertevorrichtung 4 beim Auftreten von erkannten Maxima und/oder Minima einen Zähler 19.

Die Auswertevorrichtung 4 ermittelt einen ersten Anteil $x_1$ der Position x des Körpers 1 anhand der Anzahl der aufgetretenen Maxima bzw. Minima in den Sensorausgangssignalen $S_a$, $S_b$. Der Anteil $x_1$ wird beispielsweise durch die Anzahl der Maxima und Minima im Sensorsignal S multipliziert mit dem Wegmarkenabstand d bestimmt. Werden die Extremwerte eines zweiten Sensorsignals ebenfalls berücksichtigt, so ist der Zählerstand Z mit d/2 zu multiplizieren, da doppelt so viele Extremwerte bei gleichem Weg gezählt werden. Die Genauigkeit bei der Wegerfassung verdoppelt sich jedoch entsprechend.

Eine Signalverarbeitungseinrichtung 16 gleicht die Signalamplituden der Sensorausgangssignale $S_a$, $S_b$ an und entfernt den jeweiligen Mittelwert der Signale $S_a$, $S_b$. Nach dieser Signalverarbeitung liegen annähern sinus- bzw. cosinusförmige Signale $S'_a$, $S'_b$ vor.

Diese Signale $S'_a$, $S'_b$ werden von einer Signalkorrektureinrichtung 8 korrigiert bzw. normiert, um den Einfluß von Verschmutzung der Meßstrecke und Ungleichmäßigkeiten in der Wegmarkenanordnung zu reduzieren. Weiterhin sind die Reflexionseigenschaften von Markierungen und Zwischenräumen nicht über die ganze Meßstrecke konstant. Insbesondere durch Verschmutzung oder Ablagerung ändert sich das Reflexionsverhalten der Zwischenräume 5 und somit die Werte der erfaßten Signale im Laufe der Zeit. Um dies zu korrigieren, werden die Sensorsignale $S_a$, $S_b$ bei einer unverschmutzten "Referenzbewegung" des Körpers 1 erfaßt und in einer Speichereinrichtung 9 gespeichert. Bei einem späteren Betrieb der Meßvorrichtung wird das erfaßte Sensorsignal mit dem entsprechenden gespeicherten Wert für die gleiche Position des Körpers 1 verglichen und korrigiert.

Die Fig. 4a zeigt den Verlauf eines Sensorsignals für eine Bewegung des Körpers. Man kann deutlich die unterschiedlichen Amplituden der sinusförmigen Schwingung des Sensorsignals S erkennen. In einem Bereich der Bewegung, der dem linken Bildabschnitt entspricht, sind die Amplituden des Signals durch eine Verschmutzung der Meßstrecke mit Öl stark verringert. Es fällt auf, daß Maxima und Minima des Signals durch die Verschmutzung ungleich beeinträchtigt werden.

Durch die Verschmutzung werden hauptsächlich die Reflexionseigenschaften der Zwischenräume mit einem hohen Reflexionsgrad beeinträchtigt, weshalb die Signalwerte der Maxima verringert sind. Da bei den Minima des Signals ohnehin kaum Licht reflektiert wird, wirkt sich die Verschmutzung dort kaum noch aus.

Zur Korrektur dieser Signalbeeinträchtigung werden die Maximalund Minimalwerte der einzelnen Perioden der Schwingung, d.h. die Hüllkurve des Signals, bei jedem Verfahrweg erfaßt und in der Speichereinrichtung 9 abgespeichert. Die Signalkorrektureinrichtung 8 korrigiert dann die zukünftigen Amplituden der einzelnen Perioden. Hierzu werden die Signalwerte der einzelnen Schwingungen mit Hilfe der abgespeicherten Maxima und Minima derart normiert, daß sich ein gleichmäßiges Messsignal mit konstanten Amplituden ergibt.

Die derart korrigierten Signale $S''_a$, $S''_b$ werden einer Divisionseinrichtung 7 zugeführt, die das korrigierte Sensorsignal $S''_a$ durch das korrigierte Sensorsignal $S''_b$ dividiert. Da das Signal $S_b$ bzw. $S''_b$ des zweiten Sensors bedingt durch den Versatz des Sensors gegenüber dem ersten Sensor eine Phasenverschiebung von $90°$ aufweist, entspricht das erhaltenen Divisionssignal D näherungsweise einer Tangensfunktion. Um die Phasenbeziehung zwischen den Wegmarkierungen 2 und den Sensoren 3a, 3b bzw. die relative Lage der Sensoren 3a, 3b zu den jeweilig erfaßten Wegmarken 2' zu ermitteln, führt eine Transformationsvorrichtung 10 eine Rücktransformation des tangensförmigen Divisionssignals D durch. Nach Anwendung der Arkustangensfunktion auf das Divisionssignal D erhält man ein stückweise lineares, sägezahnförmiges Interpolationssignal I. Die Lage der Sensoren 3a, 3b bezüglich der jeweilig erfaßten Wegmarke 2' kann durch eine lineare Interpolation zwischen den Extremwerten des Interpolationssignals I ermittelt werden.

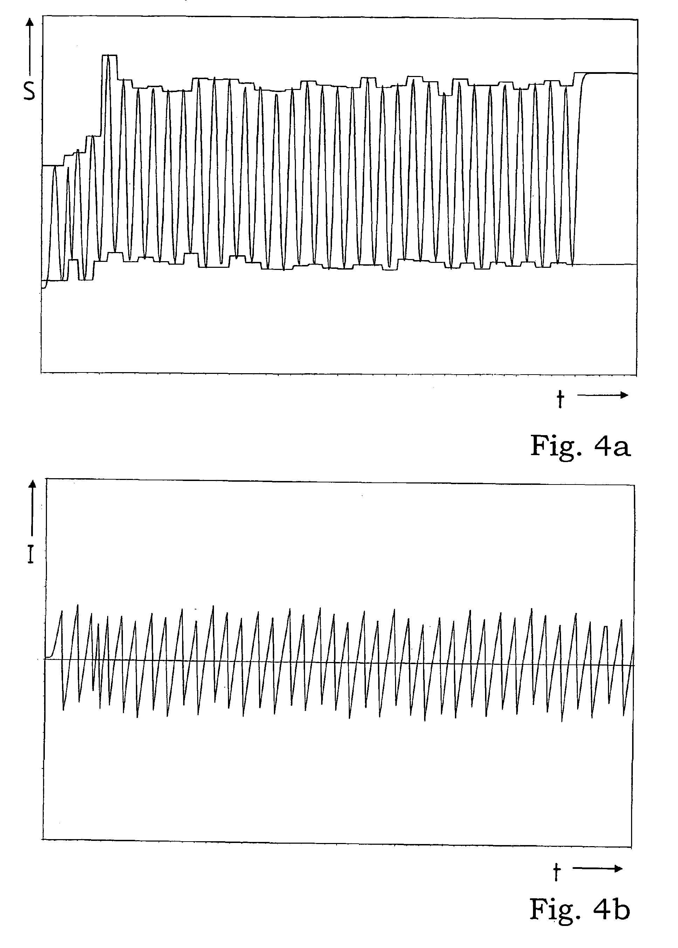

Die Figur 4b zeigt den Verlauf des Interpolationssignals I für eine geradlinige Bewegung des Körpers 1. Durch die Signalkorrektur der Sensorsignale $S_a$, $S_b$ vor der Division entsteht ein nahezu gleichförmiges Signal. Der Abstand der Maxima dieses Signals entspricht dem Wegmarkenabstand d. Die Sensorpositionen zwischen den Extremwerten können durch Interpolation ermittelt werden.

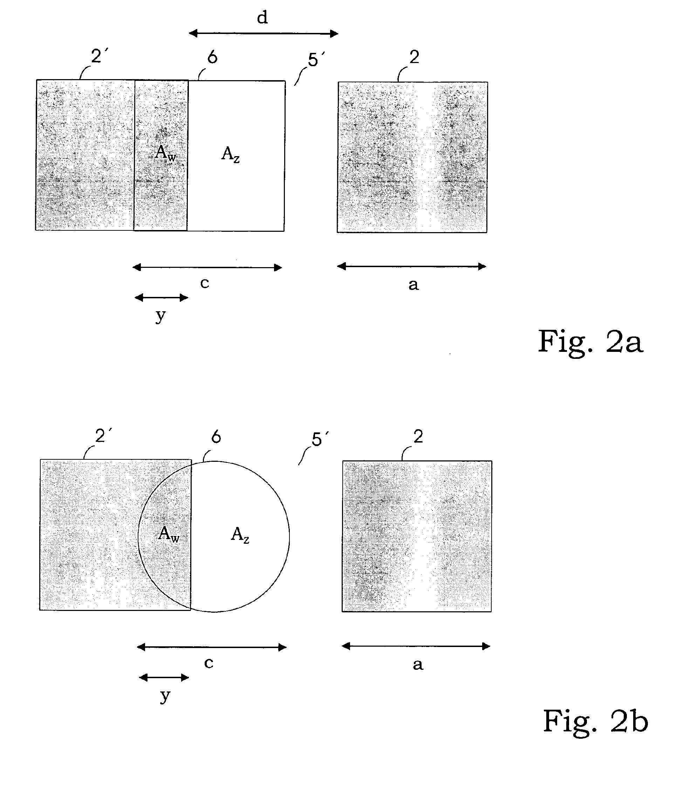

Die Fig. 2a zeigt eine schematische Darstellung zur Erläuterung des Zusammenhangs zwischen den vom Sensor erfaßten Flächen $A_W$, $A_Z$ und dem Sensorsignal S. Die dargestellte quadratische Wegmarke 2' mit einer Kantenlänge a besitzt für das vom Sensor 3 emittierte Licht einen Reflexionskoeffizienten $r_W$. Der Reflexionskoeffizient des Zwischenraums 5' beträgt $r_Z$. Die Kantenlänge c des ebenfalls quadratischen Sensorerfassungsbereichs 6 entspricht dem Wegmarkenabstand d bzw. der Kantenlänge a der Wegmarken. Der Sensorerfassungsbereich 6 und die Wegmarke 2' überlappen sich in Bewegungsrichtung des Körpers um y.

Für das Sensorsignal S gilt unter Berücksichtigung der Beleuchtungsstärke B, einer Konstanten k und den vom Sensor erfaßten Flächen

$$S = k \cdot B \cdot (r_Z \cdot (a-y) \cdot a + r_W \cdot y \cdot a).$$

Mit dem Signalwert $S_0 = k \cdot B \cdot r_Z \cdot a^2$, der dann auftritt, wenn der vom Sensor erfaßte Bereich 6 mit dem Zwischenraum 5' übereinstimmt, erhält man für das Sensorsignal

$$S = S_0 \left( \frac{A_W}{A_0} \cdot \frac{r_W - r_Z}{r_Z} + 1 \right),$$

wobei $Aw = y \cdot a$ die vom Sensor erfaßte Fläche der Wegmarke 2' und $A_0 = a^2$ die Fläche des Zwischenraums 5' ist.

Das Sensorsignal S ist eine lineare Funktion der Fläche Aw bzw. der Überlappung y von Wegmarke 2' und Sensorerfassungsbereich 6. Die Lage des Sensorerfassungsbereichs 6 bzw. des Sensors 3 kann also durch eine lineare Funktion aus dem Sensorsignal S abgeleitet werden.

Die Fig. 2b zeigt die Anordnung einer quadratischen Wegmarke 2' und eines kreisförmigen Sensorerfassungsbereichs 6 mit einem Radius $r = a/2$. Für das Sensorsignal S gilt

$$S = k \cdot B \, (r_Z \cdot (A_0 - A_W) + r_W \cdot A_W).$$

Mit dem Signalwert $S_0 = k \cdot B \cdot r_Z \cdot A_0$ für das Reflexionssignal des Zwischenraums 5' ergibt sich ebenfalls

$$S = S_0 \left( \frac{A_W}{A_0} \cdot \frac{r_W - r_Z}{r_Z} + 1 \right).$$

Auch bei einer kreisförmigen Sensorerfassungsfläche 6 liegt ein linearer Zusammenhang zwischen der vom Sensor erfaßten Fläche $A_W$ der Wegmarke 2' und dem Sensorerfassungssignal S.

Für die vom Sensor 3 erfaßte Fläche $A_W$ der Wegmarke 2' ergibt sich jedoch der folgende Zusammenhang zu der Strecke y, welche die Überlappung von Wegmarke 2' und Sensorerfassungsbereich 6 in Bewegungsrichtung kennzeichnet:

$$A_W = y \cdot \sqrt{1-y^2} + \arcsin y + \frac{\pi}{2}.$$

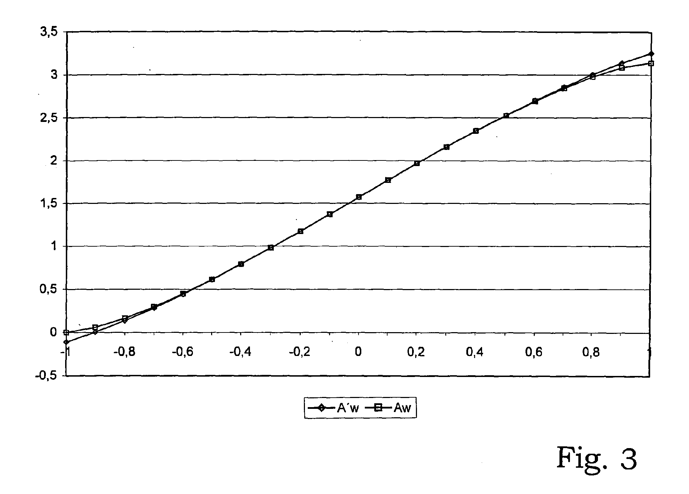

Diese Flächenfunktin $A_W$ ist für y von -1 bis +1 in Fig. 3 dargestellt. Weiterhin zeigt Fig. 3 die Funktion $A'_W = 2 \cdot \sin y + \pi/2$. Da beide Funktionen über weite Bereiche nahezu identisch sind, kann die Flächenfunktion $A_W$ durch die sinusförmige Funktion $A'_W$ gut ange-

nähert werden. Die Sensorausgangssignale $S_a$, $S_b$ können somit als sinus- bzw. cosinusförmige Signale betrachtet werden.

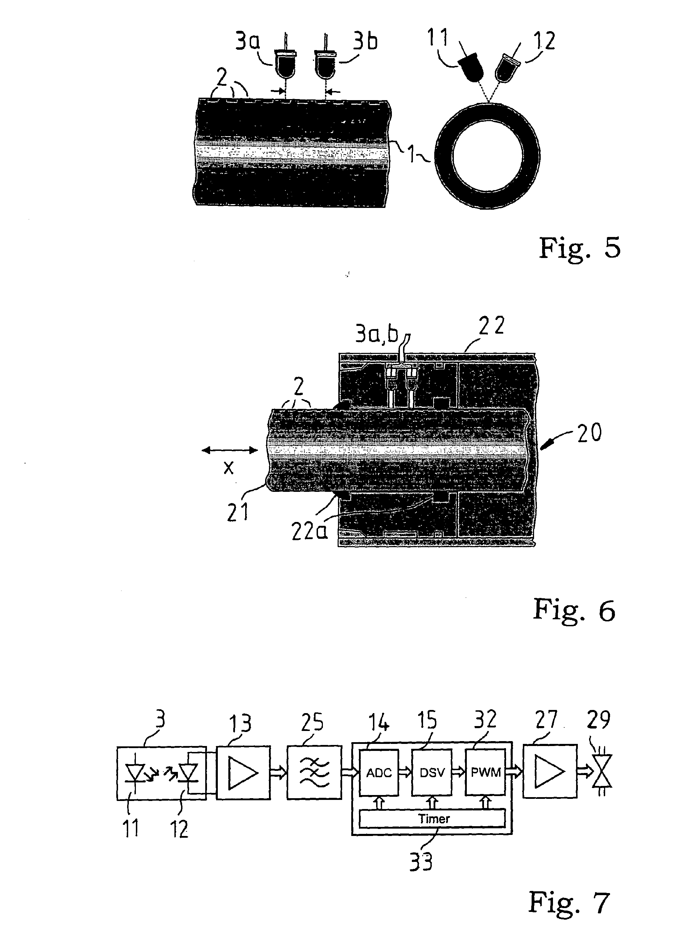

Die Fig. 5 zeigt schematisch eine Anordnung der Sensoren 3a, 3b zur Erfassung des reflektierten Lichts eines Bereichs des Körpers 1. Die Wegmarken 2 sind auf der Zylinderoberfläche einer Kolbenstange 21 eines Hydraulikzylinders angeordnet. Der Abstand der Sensoren 3a, 3b beträgt in diesem Beispiel das Neunfache des halben Wegmarkenabstands d.

Jeder Sensor 3a, 3b weist eine Sendeleuchtdiode 11 und eine Empfangsphotodiode 12 auf. Die Anordnung von Sendeleuchtdiode 11 und Empfangsphotodiode 12 weist einen Winkel von 55° auf. Die Lichtaustrittsöffnung der Reflexlichtschranke ist den Abmessungen der Wegmarken 2 angepaßt, so daß maximal eine Markierung 2' beleuchtet wird und zur Reflexion beitragen kann. Bedingt durch die gekrümmte Oberfläche der Zylinderstange 21 wird nur ein Teil der beleuchteten kreisrunden Fläche direkt auf die Photodiode 12 reflektiert. Das emittierte Licht der Leuchtdiode 11 liegt im Infrarotbereich und weist eine schmalbandige Leistungskurve auf, die der Empfindlichkeit der Photodiode 12 angepaßt ist. Der Photostrom der Empfangsphotodiode 12 ist proportional zur einfallenden Lichtstärke. Die Photodiode 12 kann einen Tageslichtfilter aufweisen, um Störungen des Signals durch gestreutes Tageslicht zu reduzieren.

Die Fig. 6 zeigt schematisch eine Anordnung der Sensoren 3a, 3b in dem Zylinderkopf 22 eines Hydraulikzylinders 20. Durch diese Anordnung der Sensoren 3a, 3b sind sie vor Beschädigungen und Streulicht geschützt. Weiterhin können Verschmutzungen der Meßstrecke durch Dichtungen 22a, die das Eindringen von Schmutz in den Zylinderkopf 22 verhindern, reduziert werden.

Die Fig. 7 zeigt schematisch ein Blockschaltbild einer erfindungsgemäßen Steuervorrichtung zur Steuerung des Verfahrwegs von Hydraulikzylindern.

Der Photostrom der Empfangsphotodiode 12 wird von einem Transimpedanzverstärker 13 in eine Spannung gewandelt und verstärkt. Um Aliasing-Frequenzen zu unterdrücken, wird das Signal vor einer Analog/Digital-Wandlung durch ein Anti-Aliasing-Tiefpaßfilter 25 bandbegrenzt. Ein Analog/ Digital-Wandler 14 wandelt das Signal zur Verarbeitung durch einen Mikrocontroller 15. Die Steuervorrichtung weist weiterhin einen Taktgenerator 33 und eine Pulsweitenmodulationssteuereinheit 32 auf. Der Mikrocontroller 15 führt eine Regelung der Position der Kolbenstange 21 eines Hydraulikzylinders 20 unter Berücksichtigung der ermittelten Kolbenstangenposition x und einer Soll-Position $X_0$ aus. Abhängig von der Differenz zwischen der ermittelten Kolbenstangenposition x und der Soll-Position $X_0$ erzeugt die PWM-Steuereinheit 32 ein PWM-Signal, das von einem Leistungsverstärkers 27 verstärkt wird. Ein Proportionalventil 29 wird zur Einstellung des benötigten Drucks in dem Hydraulikzylinder 20 von dem Leistungsverstärker 27 mit dem verstärkten PWM-Signal angesteuert.

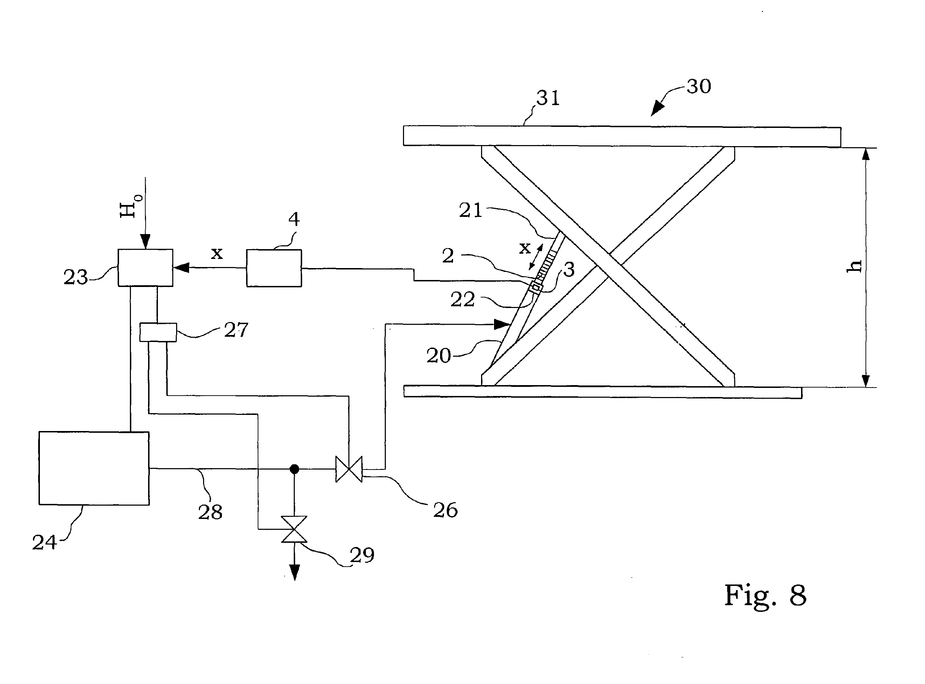

Die Fig. 8 zeigt eine schematische Darstellung einer erfindungsgemäßen Steuervorrichtung zur Steuerung der Hubhöhe h einer Hebebühne 30.

Die Scherenhebebühne 30 weist zur Verstellung der Hubhöhe h einer Plattform 31 ein oder mehrere Hydraulikzylinder 20 auf. Die Auswertevorrichtung 4 ermittelt den Verfahrweg x des Hydraulikzylinders 20 und führt diesen einer Steuereinheit 23 zu. Die Steuereinheit 23 ermittelt anhand der bekannten Geometrie der Hebebühne 30 die dem Verfahrweg x entsprechende Hubhöhe h. Zur Regelung der Plattform bzw. Fahrfläche 31 vergleicht die Steuereinheit 23 die ermittelte Hubhöhe h mit einer Sollhöhe $H_0$. Unter Berücksichtigung der Regelabweichung $H_0$ - h führt die Steuereinheit 23 eine Regeloperation nach einer vorgegebenen Regelcharakteristik (z.B. P, PI, PID) aus.

Zur Regelung der Hubhöhe h steuert die Steuereinheit eine Hydraulikeinheit 24 und die Hydraulikventile 26, 29 an. Mit dem Absperrventil 26 kann die Hydraulikleitung 28 zwischen Hydraulikzylinder 20 und Hydraulikeinheit 24 gesperrt werden. Über das Proportionalventil 29 kann die Steuereinheit 23 Hydraulikflüssigkeit aus der Hydraulikleitung 28 und dem Hydraulikzylinder 20 ablassen, um den Verfahrweg x des Hydraulikzylinders 20 zu regeln.

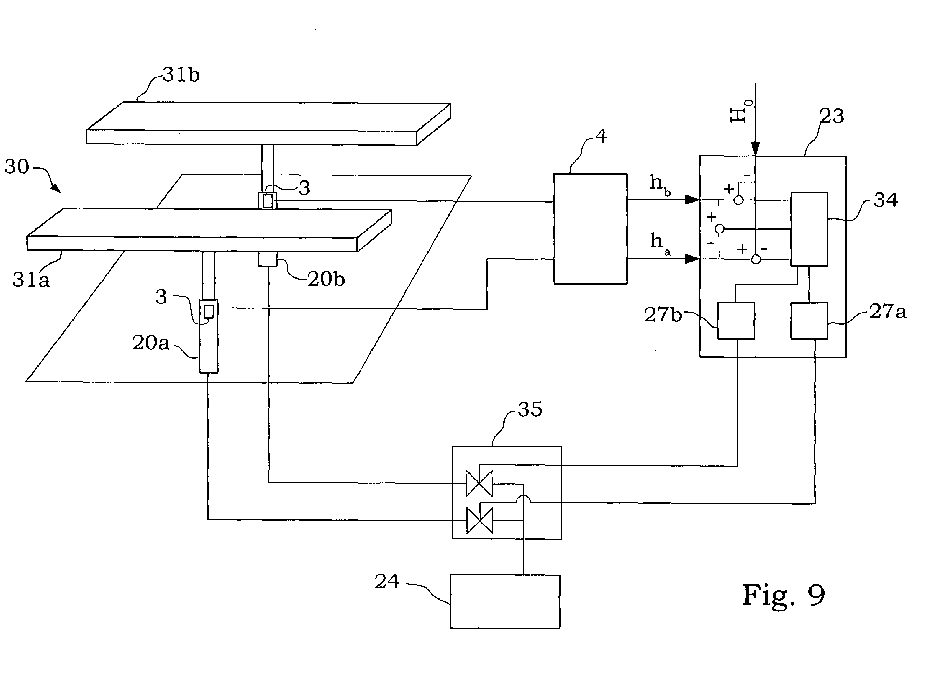

Die Figur 9 zeigt eine schematische Darstellung einer erfindungsgemäßen Steuervorrichtung zur Steuerung der Hubhöhe einer zweiteilig ausgebildeten Stempelhebebühne 30 mit zwei Plattformen bzw. Fahrflächen 31a, 31b und zwei Verstelleinrichtungen 20a, 20b.

Die Auswertevorrichtung 4 ermittelt die Hubhöhen $h_a$, $h_b$ der beiden Plattformen 31a, 31b anhand der Verfahrwege $x_a$, $x_b$ der Hydraulikzylinder 20a, 20b. Zur Regelung der Hubhöhen $h_a$, $h_b$ der Hebebühne 30 bildet die Steuereinheit 23 die Regelabweichungen $h_a$ - $H_0$, $h_b$ - $H_0$ und ggf. $h_a$ - $h_b$. Um die Hubhöhen $h_a$, $h_b$ synchron zu regeln, werden diese Differenzen von einer Regeleinrichtung 34 ausgewertet. Leistungsverstärker 27a, 27b steuern die Ventile einer Ventileinheit 35 zur Erzeugung des jeweiligen Hydraulikdrucks der Hydraulikzylinder 20a, 20b. Die Regeleinrichtung 34 kann eine Positions- und/oder eine Geschwindigkeitsregelung der Hydraulikzylinder 20a, 20b durchführen. Auf diese Weise ist es möglich, die Plattformen 31a, 31b synchron anzuheben bzw. abzusenken.

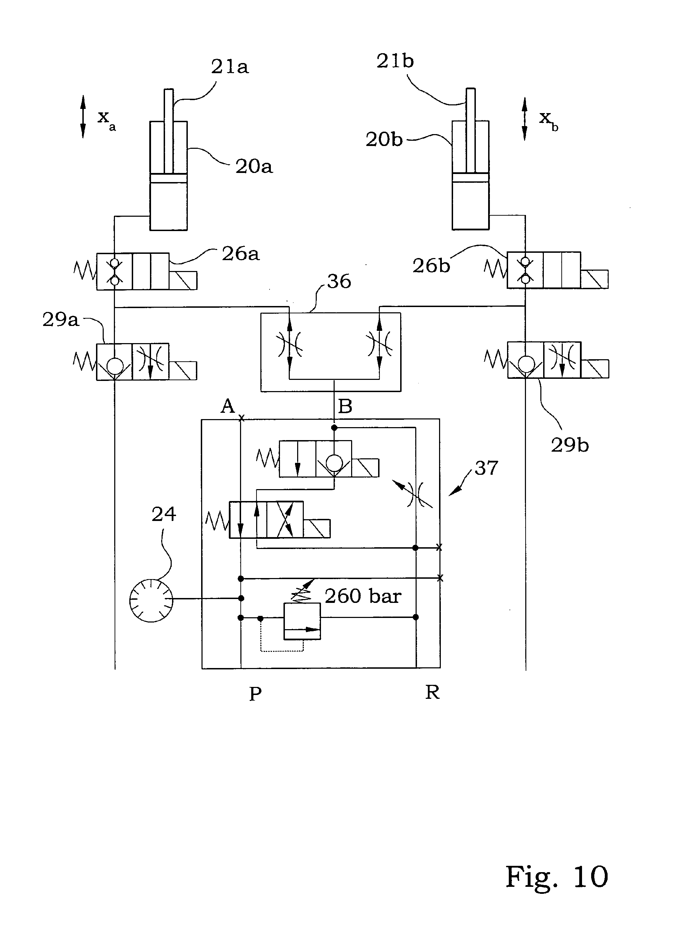

Die Fig. 10 zeigt schematisch einen Hydraulikplan für die synchrone Steuerung der Verfahrwege $x_a$, $x_b$ der Hydraulikzylinder 20a, 20b.

Ein Ventilblock 37 ist mit einer Hydraulikeinheit 24 zur Erzeugung eines Fluiddrucks verbunden. Der Ventilblock 37 weist Hydraulikventile und einen Druckregler auf. Zum Auffahren der Hydraulikzylinder 20a, 20b wird das Hauptventil im Ventilblock 37 betätigt und Hydrauliköl strömt zum Stromteiler 36. Dieser teilt den Volumenstrom ca. 1:1 in zwei Ausgangskreise auf. Die Sitzventile 26a, 26b sind beim Auffahren auf Durchfluß geschaltet. Die Zylinderstangen 21a, 21b werden nun durch den Kolbendruck aus dem Zylinderkörper gedrückt. Durch die Bewegungen der Kolbenstangen 21a, 21b können dann beispielsweise die Fahrflächen 31a, 31b einer Stempelhebebühne 30 angehoben werden.

Bei Erreichen der gewünschten Position werden alle Ventile stromlos geschaltet und sind geschlossen. Die Sitzventile 26a, 26b sind räumlich nahe an den Zylindern 20a, 20b angeordnet und halten im Ruhezustand den Druck in den Zylindern 20a, 20b sowie die Position der Kolbenstangen 21a, 21b aufrecht. Zum Abfahren werden die Sitzventile 26a, 26b und das Hauptventil im Ventilblock 37 geöffnet. Das Hydrauliköl wird durch die Gewichtsbelastung der Hydraulikzylinder 20a, 20b durch den Hydraulikkreis zurückgedrückt und in einem Sammelbehälter gesammelt. Da jedoch das Ölvolumen durch den Stromteiler 36 nicht exakt auf beide Zylinder 20a, 20b verteilt wird, sind die Verfahrwege $x_a$, $x_b$ der Hydraulikzylinder 20a, 20b nicht gleich.

Zur Regelung der Verfahrwege $x_a$, $x_b$ berechnet der Mikrocontroller 15 der Steuereinheit 23 anhand der Regelabweichung die Stellgrößen für die Hydraulikzylinder 20a, 20b. Die Stellgrößen werden beispielsweise von der PWM-Steuereinheit 32 in PWM-Steuersignale gewandelt und von den Leistungsverstärkern 27a, 27b verstärkt.

In dem Hydraulikkreis sind zwei Proportionalventile 29a, 29b angeordnet, die von dem PWM-Signal angesteuert werden,. Bei Betätigung zweigen die Proportionalventile 29a, 29b einen Teil des Volumenstroms der Hydraulikflüssigkeit vor den Sitzventilen 26a, 26b ab. Durch diesen Eingriff kann korrigierend auf den jeweiligen Zylinderhub $x_a$, $x_b$ der Hydraulikzylinder 20a, 20b eingewirkt werden. Zweckmäßigerweise wird dasjenige Hydraulikventil 29a, 29b beaufschlagt, dessen Zylinder 20a, 20b im Vergleich zur anderen Seite einen zu großen Verfahrweg $x_a$, $x_b$ aufweist.

Bei dieser Anordnung sind in jedem Hydraulikstrang mindestens zwei Ventile in Reihe angeordnet. Das hat den Vorteil, daß beim Ausfall eines Ventils das zweite Ventil die Stellung des Zylinderkolbens halten kann. Da alle Ventile im stromlosen Zustand geschlossen sind, werden die Hydraulikzylinder bei einem Stromausfall in ihrer Position gehalten. Zweckmäßigerweise kann eine Notablaßeinrichtung vorgesehen sein, um in dieser Situation beispielsweise ein von der Hebebühne angehobenes Fahrzeug herunterzulassen.

**Patentansprüche**

1. Meßvorrichtung zur Ermittlung der Position x eines beweglichen Körpers (1), mit mehreren Wegmarken (2) auf dem beweglichen Körper (1), einem Sensor (3), der einen zumindest eine Wegmarke (2') und/oder zumindest einen Zwischenraum (5') zwischen den Wegmarken (2) umfassenden Bereich des Körpers (1) erfaßt, und einer Auswertevorrichtung (4), die einen Zählerstand Z unter Berücksichtigung des Sensorausgangssignals S verändert, um eine Bewegung des Körpers (1) zu erfassen, die einen Zusammenhang der vom Sensor (3) erfaßten Bereiche von Wegmarken (2) und Zwischenräumen (5) anhand des Signalwertes des Sensorausgangssignals S ermittelt, und welche die Position x des Körpers (1) basierend auf dem Zählerstand Z und dem ermittelten Zusammenhang bestimmt.

2. Meßvorrichtung nach Anspruch 1, wobei der Sensor (3) als optischer Reflexionssensor ausgebildet ist, der Licht emittiert und die Menge von reflektiertem Licht erfaßt.

3. Meßvorrichtung nach Anspruch 2, wobei der Reflexionsgrad $r_W$ der Wegmarken (2) für das vom Sensor (3) emittierte Licht unterschiedlich vom Reflexionsgrad $r_Z$ des zwischen den Wegmarken (2) liegenden Zwischenraum (5) ist.

4. Meßvorrichtung nach zumindest einem der Ansprüche 1 bis 3, wobei die Wegmarken (2) in Bewegungsrichtung des Körpers (1) in einem gleichmäßigem Abstand d angeordnet und gleichförmig ausgebildet sind.

5. Meßvorrichtung nach zumindest einem der Ansprüche 1 bis 4, wobei der Abstand d zwischen den Wegmarken (2) der Abmessung a der Wegmarken (2) in Bewegungsrichtung des Körpers (1) entspricht, und die Abmessung c der beleuchteten Fläche in Bewegungsrichtung des Körpers (1) dem Wegmarkenabstand d entspricht.

6. Meßvorrichtung nach zumindest einem der Ansprüche 1 bis 5, wobei der Sensor (3) eine annähernd kreisförmige Fläche des Körpers (1) erfaßt.

7. Meßvorrichtung nach zumindest einem der Ansprüche 1 bis 6, wobei zumindest zwei Sensoren (3a, 3b) vorgesehen sind, die in Bewegungsrichtung des Körpers (1) um das Vielfache des halben Wegmarkenabstands d versetzt sind, und die Auswertevorrichtung (4) die Position x des Körpers (1) anhand der Ausgangssignale $S_a$, $S_b$ der Sensoren (3a, 3b) ermittelt.

8. Meßvorrichtung nach Anspruch 7, wobei die Auswertevorrichtung (4) anhand der Phasenbeziehung der Sensorausgangssignale $S_a$, $S_b$ die Bewegungsrichtung des Körpers (1) ermittelt und den Zählerstand Z entsprechend inkrementiert oder dekrementiert, insbesondere anhand der Maxima und/oder Minima der Sensorsignale $S_a$, $S_b$.

**9.** Meßvorrichtung nach zumindest einem der Ansprüche 1 bis 6, wobei die Auswertevorrichtung (4) eine Signalverarbeitungseinrichtung (16) aufweist, die das Sensorausgangssignal S verarbeitet, um Signalamplituden zu normieren, einen Offset bzw. Mittelwert zu entfernen und/oder Störungen im Signal zu reduzieren, insbesondere durch Filterung des Signals S.

**10.** Meßvorrichtung nach zumindest einem der Ansprüche 7 bis 9, wobei die Auswertevorrichtung (4) eine Divisionseinrichtung (7) aufweist, die das Ausgangssignal $S_a$ eines ersten Sensors (3a) durch das Ausgangssignal $S_b$ eines zweiten Sensors (3b) dividiert, um die Anteile der von den Sensoren (3a, 3b) erfaßten Flächen $A_W$, $A_Z$ von Wegmarke (2') und Zwischenraum (5') aus dem erhaltenen Divisionssignal D zu ermitteln.

**11.** Meßvorrichtung nach zumindest einem der Ansprüche 7 bis 10, wobei die Auswertevorrichtung (4) durch Auswertung von trigonometrischen Funktionen der sinus- bzw. cosinusförmigen Sensorausgangssignale $S_a$, $S_b$ die Phasenbeziehung zwischen den Wegmarken (2) und den Sensoren (3a, 3b) unter Erhalt eines Interpolationssignals I ermittelt, insbesondere durch Division der sinus- bzw. cosinusförmigen Sensorausgangssignale $S_a$, $S_b$ und Anwendung der Arkustangensfunktion auf das erhaltene Divisionssignal D, und die Lage der Sensoren (3a, 3b) im Verhälnis zu den Wegmarken (2) bestimmt.

**12.** Meßvorrichtung nach zumindest einem der Ansprüche 1 bis 11, wobei die Auswertevorrichtung (4) eine Signalkorrektureinrichtung (8) aufweist, die erfaßte Sensorsignalwerte korrigiert bzw. normiert.

**13.** Meßvorrichtung nach zumindest einem der Ansprüche 1 bis 12, wobei die Auswertevorrichtung (4) eine Speichereinrichtung (9) aufweist, welche die erfaßten Signalwerte und/oder Maximalwerte und/oder Minimalwerte des Sensorausgangssignals S bzw. der Sensorausgangssignale $S_a$, $S_b$ speichert.

**14.** Meßvorrichtung nach Anspruch 13, wobei die Signalkorrektureinrichtung (8) den Wert eines erfaßten Sensorausgangssignals S, $S_a$, $S_b$ mit einem gespeicherten Wert einer vorherigen Bewegung des Körpers (1) vergleicht und den erfaßten Signalwert unter Berücksichtigung der gespeicherten Werte korrigiert bzw. normiert.

**15.** Meßvorrichtung nach zumindest einem der Ansprüche 12 bis 14, wobei die Signalkorrektureinrichtung (8) das Divisionssignal D und/oder das Interpolationssignal I anhand von vorher erhaltenen Werten des entsprechenden Signals korrigiert bzw. normiert, insbesondere unter Berücksichtigung der Maximal- und/oder Minimalwerte des vorherigen Signals.

**16.** Meßvorrichtung nach Anspruch 14 oder 15, wobei die Speichereinrichtung (9) das Divisionssignal D und/oder das Interpolationssignal I einer vorherigen Bewegung des Körpers und/oder Maximalwerte und/oder Minimalwerte des entsprechenden Signals speichert und die Signalkorrektureinrichtung (8) das Divisionssignal D und/oder das Interpolationssignal I anhand der gespeicherten Werte korrigiert bzw. normiert.

**17.** Meßvorrichtung nach zumindest einem der Ansprüche 1 bis 16, wobei ein Korrektur-Sensor vorgesehen ist, der in Bewegungsrichtung des Körpers (1) in einem bestimmten Abstand von dem Sensor (3) bzw. den Sensoren (3a, 3b) angeordnet ist, und dessen Signal von der Signalkorrektureinrichtung (8) zur Korrektur bzw. zur Normierung des Signals S bzw. der Signale $S_a$, $S_b$ der anderen Sensoren (3, 3a, 3b ) verwendet wird, insbesondere indem die Signalkorrektureinrichtung (8) anhand der Signalwerte des Korrektur-Sensors die Maximalwerte und/oder Minimalwerte des bzw. der anderen Sensoren (3, 3a, 3b ) vorbestimmt.

**18.** Meßvorrichtung nach zumindest einem der Ansprüche 1 bis 17, wobei der Sensor (3) als Reflexlichtschranke (10) mit einer Sendeleuchtdiode (11) und einer Empfangsphotodiode (12) ausgebildet ist, und der Photostrom der Empfangsphotodiode (12) von einem Transimpedanzverstärker bzw. Strom-Spannungs-Wandler (13) verstärkt wird.

**19.** Meßvorrichtung nach zumindest einem der Ansprüche 1 bis 18, wobei die Auswertevorrichtung (4) einen Analog/ Digital-Wandler (14) und einen Mikrocontroller (15) aufweist, der den Zählerstand Z für die Anzahl der Maxima und/oder Minima des digitalisierten Sensorausgangssignals S führt und das Verhältnis der Flächen Aw, Az von Wegmarke (2') und Zwischenraum (5') anhand der digitalisierten Sensorsignalwerte ermittelt und gegebenenfalls die Korrektur und Speicherung von Signalen ausführt.

**20.** Meßvorrichtung nach zumindest einem der Ansprüche 1 bis 19, wobei die Wegmarken (2) durch Lasergravur auf dem bewegten Körper (1) aufgebracht sind.

**21.** Meßvorrichtung nach zumindest einem der Ansprüche 1 bis 18 wobei die Wegmarken (2) auf der Zylinderoberfläche einer Kolbenstange (21) eines Hydraulikzylinders (20) angeordnet sind.

**22.** Meßvorrichtung nach Anspruch 21, wobei der Sensor (3) in einem Zylinderkopf (22) des Hydraulikzylinders (20) angeordnet ist.

23. Verwendung der Meßvorrichtung nach zumindest einem der Ansprüche 1 bis 22 zur Messung der Position x einer Kolbenstange (21), insbesondere zur Messung des Verfahrwegs der Kolbenstange (21) eines Hydraulikzylinders (20).

24. Steuervorrichtung zur Steuerung des Verfahrwegs x von Hydraulikzylindern mit
    einer Meßvorrichtung nach zumindest einem der Ansprüche 1 bis 22 zur Erfassung des Verfahrwegs x der Kolbenstange (21) des Hydraulikzylinders (20),
    einer Steuereinheit (23) und
    einer Hydraulikeinheit (24) zur Erzeugung eines Fluiddruckes zur Betätigung des Hydraulikzylinders (20), wobei
    die Steuereinheit (23) den von der Meßvorrichtung ermittelten Verfahrweg x der Kolbenstange (21) mit einem vorgegebenen Soll-Weg $X_0$ der Kolbenstange (21) vergleicht und die Hydraulikeinheit (24) zur Erzeugung eines entsprechenden Fluiddruckes und/oder ein Hydraulikventil (26) ansteuert, um den vorgegebenen Soll-Weg $X_0$ durch Druckbeaufschlagung eines mit der Kolbenstange (21) verbundenen Kolbens (25) des Hydraulikzylinders (20) zu erzielen.

25. Steuervorrichtung nach Anspruch 24, wobei mehrere von der Hydraulikeinheit (24) über ein Hydraulikventil (26) betätigte Hydraulikzylinder (20) vorgesehen sind, deren jeweilige Kolbenstangenpositionen bzw. Verfahrwege von der Meßvorrichtung ermittelt und von der Steuereinheit (23) gesteuert werden, wobei
    die Steuereinheit (23) die Hydraulikeinheit (24) und/oder das Ventil (26) derart ansteuert, daß die relativen Positionen der Kolbenstangen (21) zueinander eine vorgegebene Beziehung aufweisen, insbesondere gleich weit aus ihrem jeweiligen Hydraulikzylinder (20) herausbewegt sind bzw einen gleichen Verfahrweg aufweisen.

26. Steuervorrichtung nach Anspruch 24 oder 25, die zumindest einen von der Steuereinheit (23) angesteuerten Leistungsverstärker (27) und zumindest ein von diesem angesteuertes Proportionalventil (29) aufweist, das in der Hydraulikleitung (28) zwischen Hydraulikeinheit (24) und Hydraulikzylinder (20) angeordnet ist und bei Betätigung Fluid bzw. Druck aus der Hydraulikleitung (28) abläßt, wobei die Steuereinheit (23) den Leistungsverstärker (27) derart ansteuert, daß der vorgegebene Soll-Weg $X_0$ der Kolbenstange (21) erzielt wird bzw. die relativen Positionen der Kolbenstangen (21) zueinander eine vorgegebene Beziehung aufweisen.

27. Verwendung der Steuervorrichtung nach zumindest einem der Ansprüche 24 bis 26 zur Steuerung der Hydraulikzylinder (20) von Hebebühnen (30), insbesondere um einen gleichmäßigen Verfahrweg der Hydraulikzylinder (20) zu erzielen.

28. Hebebühne, insbesondere für Kraftfahrzeuge, mit zumindest einem Hydraulikzylinder (20) zum Anheben bzw. Absenken einer Plattform (31) oder eines Tragwerks und einer Steuervorrichtung nach zumindest einem der Ansprüche 24 bis 27 zum Steuern des Hydraulikzylinders (20).

29. Meßverfahren zur Ermittlung der Position x eines beweglichen Körpers (1) mit mehreren Wegmarken (2), das folgende Schritte enthält:

    - Erfassen einer Signalgröße S des Lichts, das von einem Bereich des Körpers reflektiert wird, der zumindest eine Wegmarke (2') und/oder zumindest einen Zwischenraum (5') zwischen den Wegmarken (2) umfaßt,
    - Verändern eines Zählerstands Z unter Berücksichtigung des erfaßten Signals S, um eine Bewegung des Körpers (1) zu erfassen,
    - Ermitteln des Zusammenhangs zwischen den vom Sensor erfaßten Flächen $A_W$, $A_Z$ von Wegmarke (2') und Zwischenraum (5') anhand des Signalwertes S,
    - Bestimmen der Position x des Körpers (1) anhand des Zählerstands Z und des ermittelten Zusammenhangs.

30. Meßverfahren nach Anspruch 29, wobei Signale $S_a$, $S_b$ für das reflektierte Licht von zumindest zwei Bereichen des Körpers (1), die in Bewegungsrichtung des Körpers (1) um das Vielfache des halben Wegmarkenabstands d versetzt sind, erfaßt werden.

31. Meßverfahren nach Anspruch 30, wobei anhand der Phasenbeziehung zwischen den erfaßten Signalen $S_a$, $S_b$ die Bewegungsrichtung des Körpers (1) ermittelt und der Zählerstand Z entsprechend inkrementiert oder dekrementiert wird.

32. Meßverfahren nach zumindest einem der Ansprüche 29 bis 31, wobei das erfaßte Signal S bzw. die erfaßten Signale $S_a$, $S_b$ vor der Auswertung gefiltert, normiert und/oder von einem Offset bzw. Mittelwert befreit wird.

33. Meßverfahren nach zumindest einem der Ansprüche 29 bis 32, wobei ein erstes erfaßtes Signal $S_a$ durch ein zweites erfaßtes Signal $S_b$ dividiert wird, um das Verhältnis der Flächen $A_W$, $A_Z$ von erfaßter Wegmarke (2') und erfaßtem Zwischenraum (5') aus dem erhaltenen Divisionssignal D zu ermitteln.

**34.** Meßverfahren nach zumindest einem der Ansprüche 29 bis 33, wobei die erfaßten Signalwerte und/oder Maximalwerte und/oder Minimalwerte der Signale S, $S_a$, $S_b$ gespeichert werden und ein erfaßter Signalwert unter Berücksichtigung der gespeicherten Werte einer vorherigen Bewegung des Körpers (1) korrigiert bzw. normiert wird.

**35.** Meßverfahren nach zumindest einem der Ansprüche 29 bis 34, wobei zur Korrektur bzw. zur Normierung des erfaßten Signalwerts für einen bestrahlten Bereich des Körpers (1) zuvor ein Korrektur-Signal erfaßt wird, anhand dessen die Maximalwerte und/oder Minimalwerte des Signals für den Bereich bestimmt werden und/oder mit denen der Signalwert korrigiert bzw. normiert wird.

**36.** Steuerverfahren zur Steuerung des Verfahrwegs x von Hydraulikzylindern, das die Position x der Kolbenstange (21) des Hydraulikzylinders (20) nach einem Meßverfahren gemäß einem der Ansprüche 29 bis 35 ermittelt, die ermittelte Position x der Kolbenstange (21) mit einer vorgegebenen Soll-Position $X_0$ der Kolbenstange (21) vergleicht und eine Hydraulikeinheit (24) zur Erzeugung eines Fluiddruckes zur Betätigung des Hydraulikzylinders (20) und/oder ein Ventil (26) ansteuert, um die vorgegebene Soll-Position $X_0$ zu erzielen.

**37.** Steuerverfahren nach Anspruch 36, wobei die Positionen bzw. Verfahrwege der Kolbenstangen (21) von mehreren Hydraulikzylindern (20) ermittelt und miteinander verglichen werden, und die Hydraulikeinheit (24), ein Hydraulikventil (26) und/oder ein zwischen Hydraulikeinheit (24) und Hydraulikzylinder (20) angeordnetes Proportionalventil (29) derart angesteuert werden, daß die relativen Positionen der Kolbenstangen (21) zueinander eine vorgegebene Beziehung aufweisen, insbesondere gleich weit aus ihrem jeweiligen Hydraulikzylinder (20) herausbewegt sind bzw. einen gleichen Verfahrweg aufweisen.

Fig. 1

Fig. 2a

Fig. 2b

Fig. 3

Fig. 4a

Fig. 4b

Fig. 5

Fig. 6

Fig. 7

Fig. 8

Fig. 9

$^{\circ}H$

$h_b$  $h_a$

23  34  27a  27b

4  35  24

31b  30  31a  3  20b  3  20a

Fig. 10